# EUROPÄISCHE PATENTSCHRIFT

(11) **EP 1 034 106 B1**
(45) Veröffentlichungstag und Bekanntmachung des Hinweises auf die Patenterteilung: **25.09.2002**
(21) Anmeldenummer: 98965573.3
(22) Anmeldetag: 17.11.1998
(51) Int. Cl.: B62B 5/02, A61G 5/06, B62D 55/075

(54) **MOTORISCH BETRIEBENE TREPPENSTEIGVORRICHTUNG**
MOTOR-DRIVEN STAIR CLIMBING DEVICE
DISPOSITIF A MOTEUR POUR MONTER DES ESCALIERS

(30) Priorität: 05.12.1997 DE 29721477 U
(43) Veröffentlichungstag der Anmeldung: 13.09.2000
(73) Patentinhaber: Otto Bock HealthCare GmbH, 37115 Duderstadt (DE)
(72) Erfinder: CARSTENS, Bernt, D-67434 Neustadt (DE)
(74) Vertreter: Rehmann, Klaus-Thorsten, Dipl.-Ing.
(86) Internationale Anmeldenummer: DE9803378
(87) Internationale Veröffentlichungsnummer: WO99029554

(56) Entgegenhaltungen:
- WO-A-90/00997
- DE-B- 1 024 367
- FR-A- 2 574 740
- US-A- 3 346 268
- US-A- 4 061 199
- US-A- 4 432 425
- US-A- 5 141 240

## Beschreibung

Die Erfindung betrifft motorisch betriebene Treppensteigvorrichtungen für den Transport von Geräten und Gütern, insbesondere von Rollstühlen mit gehunfähigen Personen, wobei der Rollstuhl am Treppensteiger lösbar befestigt ist, gemäß dem Oberbegriff des Anspruchs 1. Eine derartige Treppensteigvorrichtung zeigt die US-A-4,061,199.

Motorisch angetriebene, treppensteigende Vorrichtungen sind bekannt. Für den Transport von Rollstühlen mit gehunfähigen Personen sind zwei Konstruktionsprinzipien weit verbreitet. Das eine Konstruktionsprinzip verwendet eine Mehrzahl von Rädern, die sich nicht nur um ihre eigene Achse, sondern gleichzeitig um eine allen Rädern gemeinsame Achse drehen. Man vergleiche DE-C 37 13 564 oder DE-C 32 26 294. An diesen Geräten ist einerseits vorteilhaft, daß nur gummibereifte Räder mit der Treppe und insbesondere der Treppenkante in Berührung kommen, so daß Beschädigungen größtenteils ausgeschlossen sind; andererseits ist sehr gefährlich, daß die Räder nur mit beschränkter Tiefe in die Stufen eingreifen können. Die Bedienung dieser Vorrichtungen bedarf daher besonderer Vorsicht und Umsicht, und zwar nicht zuletzt deshalb, weil die Last aus einem Menschen besteht. Tatsächlich sind Treppen jedoch sehr vielgestaltig; sie variieren zwischen relativ flachen, völlig gerade verlaufenden Treppen bis hin zu engen und steilen Wendeltreppen. Das Besteigen der Treppen mit den auf dem Vielräder-Prinzip beruhenden Treppensteigern ist nicht ungefährlich, weil das Gerät kippen kann. Treppensteiger, Rollstuhl und Person müssen daher von einer kräftigen Bedienungsperson im Gleichgewicht gehalten werden.

Das zweite sehr verbreitete Konstruktionsprinzip verwendet zwei parallele Raupen. Die Raupen sind so lang, daß wenigstens drei Treppenstufen gleichzeitig erfaßt werden. Dadurch ist ein unbeabsichtigtes Abkippen von Rollstuhl und Person nicht mehr möglich, so daß Stürze mit resultierenden Verletzungen oder gar Todesfällen ausscheiden. Aufgrund der Länge der Raupen haben diese Treppensteiger jedoch Probleme beim Befahren von schmalen und gewundenen Treppen.

Schließlich ist schon eine Treppensteigvorrichtung vorgeschlagen worden, die mit einem spinnenartigen Beinsystem arbeitet. Eine solche Vorrichtung setzt jedoch ein hochkompliziertes System von Tast- und Lagesensoren und entsprechenden Aktoren voraus, das nur mit Hilfe eines hochkomplexen Computerprogramms steuerbar ist, um zu verhindern, daß es zu Fehltritten oder zu gefährlichen Neigungen der den Rollstuhl tragenden Plattform kommt. Eine praktische Realisierung dieses Spinnenbeinprinzips ist bisher nicht bekannt geworden.

Der vorliegenden Erfindung liegt die Aufgabe zugrunde, eine Treppensteigvorrichtung der eingangs genannten Art anzugeben, die nicht nur so leicht und platzsparend ist, daß sie an beliebigen Transportgütern und insbesondere Rollstühlen abnehmbar angebracht werden kann, sondern die auch eine besonders hohe Sicherheit bietet.

Diese Aufgabe wird gelöst durch eine Treppensteigvorrichtung mit den Merkmalen des Anspruchs 1. Vorteilhafte Ausgestaltungen ergeben sich mit den Merkmalen der abhängigen Ansprüche.

Dank der vorliegenden Erfindung steht der Treppensteiger stets auf zwei Treppenstufen, und zwar entweder auf der jeweils nächsten oder, wenn die Treppe nicht zu eng oder zu sehr gewunden ist, auf der jeweils übernächsten Treppenstufe. Dadurch wird die den Treppensteiger bedienende Person kräftemäßig weitestgehend entlastet; sie hat nur noch Führungs- und Lenkungsaufgaben. Unter Anwendung des erfindungsgemäßen Konstruktionsprinzips wäre es sogar möglich, führerlose Treppensteiger zu bauen.

Ein weiterer Vorteil ist, daß die Stützvorrichtung relativ kurz gebaut werden kann, da sie nur ein bis zwei Treppenstufen überbrücken muß. Da sie außerdem sehr schmal gebaut werden kann, bereiten auch eng gewundene Treppen keine Probleme.

Gemäß einer vorteilhaften Ausgestaltung der Erfindung ist die Stützvorrichtung am Treppensteiger befestigt. Dadurch bleibt das Transportgut, insbesondere der Rollstuhl, unverändert.

Gemäß einer ersten Ausgestaltung der Erfindung führt die Stützvorrichtung eine lineare Hubbewegung aus. Linear bewegliche Stützvorrichtungen können ein oder mehrere teleskopierbare Füße oder auch ein oder mehrere Scherenarme sein.

Dieser Vorgang ist vergleichbar mit dem Treppensteigen eines gesunden Menschen.

Wird die Stützvorrichtung vorteilhafterweise so ausgeführt, daß sie eine Schwenkbewegung ausführen kann, gegebenenfalls auch zusätzlich zu der linearen Hubbewegung, so ergibt sich eine wesentlich höhere Flexibilität bezüglich der zu besteigenden Treppen.

Gemäß einer ersten Variante hierzu ist am Treppensteiger bzw. am Rollstuhl eine Montagevorrichtung vorgesehen, ausgerüstet mit einer Drehachse, an der die Stützvorrichtung schwenkbar gelagert ist. Zwischen Stützvorrichtung und Montagevorrichtung ist eine Brems- und Sperrvorrichtung vorgesehen, die von einem Sensor derart gesteuert wird, daß sie die Stützvorrichtung blockiert, sobald der Treppensteiger über die Treppe zu kippen droht, und die Stützvorrichtung freigibt, solange der Treppensteiger korrekt zur Treppe geneigt ist.

Bei dieser Konstruktion ist die Stützvorrichtung gegenüber der Treppensteigvorrichtung bzw. dem Transportgut im Normalfall völlig frei beweglich. Sie kann sich dadurch völlig frei an beliebig steile oder flache Treppen anpassen. Auch ebene Treppenpodeste bereiten keine Schwierigkeiten. Für den Transport auf der Ebene läßt sich die Stützvorrichtung sogar unter das Transportgut, insbesondere den Rollstuhl, hochklappen. Erst wenn die Treppensteigvorrichtung eine Lage einnimmt, daß Kippgefahr besteht, wird das Drehgelenk der Stützvorrichtung blockiert, und zwar so lange, bis die Bedienungsperson die Treppensteigvorrichtung wieder in eine ungefährliche Lage gebracht hat.

Vorteilhafterweise bewirken im unteren Endbereich der Stützvorrichtung angebrachte Einrichtungen, vorzugsweise Stützfüße aus einem elastischen und treppenschonenden Material, einen weitgehend senkrecht auf die Trittfläche einer der nächstfolgenden unteren Stufen auftreffenden Abstützvorgang, wenn die Schwenkbewegung blockiert wird. Es hat sich herausgestellt, daß die Abstützung auf der Trittfläche der Stufen weitaus sicherer und zuverlässiger ist als eine Abstützung an der Vorderkante der Stufen. Der beim Blockieren des Drehgelenks entstehende Ruck wird so optimal abgefangen.

Alternativ dazu ist am freien Ende der Stützvorrichtung ein endloses Raupenband angebracht. Dieses Raupenband ist so kurz, daß es nur zwei Treppenstufen überbrückt. Auch wird nur ein einziges schmales Raupenband in der Treppenmitte benötigt, so daß die Kurvengängigkeit gewahrt ist.

Gemäß einer dritten Variante ist am freien Ende der Stützvorrichtung ein Drehkreuz mit wenigstens zwei, vorzugsweise drei Stützrädern angebracht. Konstruktionen aus Drehkreuz und Stützrädern sind bei Treppensteigvorrichtungen bereits eingesetzt.

Gemäß einer vierten Variante ist an der Stützvorrichtung ein paternosterartiger Hubtrieb befestigt.

Gemäß einer vorteilhaften Weiterbildung der Erfindung besteht die Möglichkeit, den eine lineare Hubbewegung ausführenden Fuß oder Scherenarm, das Raupenband, das Drehkreuz bzw. den Paternoster motorisch anzutreiben, vorzugsweise synchronisiert mit der Hubmechanik des Treppensteigers selbst. In diesem Fall wird das Transportgut, insbesondere der Rollstuhl, mit nur minimalsten Schwankungen treppauf und treppab transportiert. Die Bedienungsperson hat nur noch Führungsfunktion, keine Haltefunktion mehr. Solche Treppensteiger können daher auch von weniger kräftigen Personen bedient werden. Die stets aktive Bremsund Sperrvorrichtung verhindert im Gefahrenfall das Abkippen des Treppensteigers mit Rollstuhl und gehunfähiger Person.

Gemäß einer ersten Variante besteht die Brems- und Sperrvorrichtung aus einem Klinkenrad und einer Klinke als Krängungssensor. Dabei liegt das Zentrum des Klinkenrades vorzugsweise im Zentrum der Drehachse und die Klinke ist als Pendel ausgebildet und an der Montagevorrichtung pendelnd montiert. Sobald der Treppensteiger nach vorne kippt, fällt die Klinke in die Verzahnung des Klinkenrades ein und blockiert das Drehgelenk. Eine solche Sperrvorrichtung ist mechanisch einfach und funktionssicher.

Dabei besteht die Klinke vorteilhafterweise aus einem massearmen Teil, der aufgrund seiner Massearmut schnell in das Klinkenrad einfällt, und einem massereichen Teil, der für die Beibehaltung der senkrechten Richtung unter der Wirkung der Erdanziehung verantwortlich ist. Beide Teile werden durch eine Feder zusammengehalten, die jedoch so schwach ist, daß sie das schnelle Einfallen der Klinke in das Klinkenrad nicht verzögert.

Dabei ist die Winkelposition des Klinkenrades zur Stützvorrichtung vorteilhafterweise einstellbar. Dadurch können Verschiebungen des Gesamtschwerpunktes, hervorgerufen durch unterschiedliche Maße und Gewichte von Treppensteiger, Rollstuhl und gehunfähiger Person, ausgeglichen werden.

Eine weitere Variante der Brems- und Sperrvorrichtung besteht aus einem blockierbaren Zugglied endlicher Länge zwischen Stützarm einerseits und Montagevorrichtung bzw. Treppensteiger andererseits.

Gemäß einer dritten Variante ist als Brems- und Sperrvorrichtung eine Backenbremse vorgesehen.

Gemäß einer vierten Variante ist als Brems- und Sperrvorrichtung eine Federbandbremse vorgesehen. Diese Bremsen arbeiten sehr schnell und sicher und besitzen bereits die nötige Freilauf-Funktion.

Auch eine Elektrokupplung oder eine Backenbremse sind geeignet.

Gemäß einer weiteren Variante ist die Brems- und Sperrvorrichtung als blockierbare Zylinder-Kolben-Einheit ausgeführt. Bevorzugt handelt es sich dabei um eine Zylinder-Kolben-Einheit mit einem internen Fluid-Umlauf und einem vom Krängungssensor angesteuerten Sperrventil im Fluid-Umlauf. Als Fluid kommen sowohl Hydrauliköle als auch Gase in Betracht.

Gemäß einer vorteilhaften Weiterbildung der Erfindung befindet sich zwischen Stützarm und Montageblech bzw. Treppensteiger eine Stützfeder. Diese Stützfeder muß so ausgelegt sein, daß sie kraftlos ist, wenn die Treppensteigvorrichtung die korrekt zur Treppe hin geneigte Position hat. Neigt sich der Treppensteiger nach hinten zur Treppe hin, so drückt die Feder ihn in die Normalposition zurück. Will der Treppensteiger gefährlich nach vorne kippen, so zieht die Feder ihn wieder in die korrekte Position zurück. In beiden Fällen entlastet somit die Stützfeder die Bedienungsperson kräftemäßig.

Um die Bedienungsperson noch weiter zu entlasten und um auch schwere Lasten schnell und vor allem sicher über die Treppe transportieren zu können, ist parallel zur Brems- und Sperrvorrichtung ein Antrieb vorgesehen. Dies kann ein Elektromotor mit Getriebe sein, ein Hydraulikzylinder, ein Elektrozylinder oder dergleichen. In jedem Fall wird der Antrieb angesteuert in Abhängigkeit von den Soll-Ist-Differenzen der Lage der Stützvorrichtung relativ zum Treppensteiger und/oder der Andruckkräfte der Stützvorrichtung auf der Treppe.

Es versteht sich, daß eine erhebliche Platz- und Gewichtsersparnis möglich ist, wenn gemäß einer Weiterbildung der Antrieb in die Brems- und Sperrvorrichtung integriert ist.

Auch für die Hubmechanik des Treppensteigers selbst sind mehrere Konstruktionsvarianten möglich.

Gemäß einer ersten Variante umfaßt die Hubmechanik im wesentlichen eine Geradführung, einen daran beweglich gelagerten Hubrahmen und wenigstens eine am Hubrahmen gelagerte, aus- und einschwenkbare Klappe. Als Antriebsquelle für die Klappe ist eine endlose Kette vorgesehen mit einem Schubhebel zwischen Kette und Klappe. Stützfüße aus einem rutschfesten und treppenschonenden Material an der Unterkante der Klappe vervollständigen die Konstruktion.

Als Antriebsquelle eignet sich bevorzugt ein Elektromotor mit Getriebe.

Gemäß einer zweiten Variante umfaßt die Hubmechanik im wesentlichen zwei paternosterartig parallel umlaufende endlose Ketten, wenigstens ein Fußelement an jeder Kette und einen Elektromotor mit Getriebe als Antriebsquelle, wobei die Fußelemente auf der Treppe aufstehen. Eine solche Konstruktion benötigt relativ wenig Energie, was die auf dem Treppensteiger mitgeführte Stromquelle deutlich entlastet. Das Material wird nur wenig belastet, so daß die Gesamtkonstruktion besonders leicht ausgeführt werden kann.

Vorzugsweise stehen die Fußelemente mit einer gerundeten Kante auf der Treppe auf. Tragen die Fußelemente zusätzlich einen rutschund abriebfesten Überzug, so erhält man optimale Verhältnisse.

Es versteht sich, daß die Sicherheit dann optimal ist, wenn der Treppensteiger maximal weit in die Treppenstufe hineingezogen wird. Um dies sicherzustellen, sind an der Rückseite des Treppensteigers rechts und links Tastfühler in Form von Kontaktleisten angebracht, die nur dann betätigt werden, wenn der Treppensteiger an der nächsthöheren Treppenkante ansteht. Erst dann wird die Antriebsquelle für den nächsten Steighub aktiviert.

Weitere Sensoren messen die obere und untere Endstellung der Klappe, des Hubrahmens bzw. der Fußelemente. Auf diese Weise ist sichergestellt, daß jeder Hubschritt, gleichgültig ob treppauf oder treppab, von einer definierten Position der Hubmechanik aus beginnt und an einer definierten Position endet.

Die korrekte Ablaufsteuerung aller Antriebe, d. h. des Hubtriebs am Treppensteiger, des Antriebs an der Stützvorrichtung und gegebenenfalls des Antriebs zwischen Treppensteiger und Stützvorrichtung, wird am besten durch einen Mikroprozessor gewährleistet.

Anhand der Zeichnung soll die Erfindung in Form von Ausführungsbeispielen näher erläutert werden. Es zeigen
- Fig.1: in schematischer Darstellung die Seitenansicht eines Treppensteigers mit Rollstuhl auf einer Treppe,
- Fig. 2: eine auszugsweise Darstellung des Treppensteigers der Fig. 1 mit einer ersten Stützvorrichtung,
- Fig. 3: ausschnittsweise in schematischer Darstellung die Seitenansicht eines zweiten Treppensteigers mit einer zweiten Stützvorrichtung und mit Rollstuhl auf einer Treppe,
- Fig. 4: ausschnittsweise in schematischer Darstellung die Seitenansicht des Treppensteigers der Fig. 1 mit einer dritten Stützvorrichtung,
- Fig. 5: eine schematische Seitenansicht eines Treppensteigers mit Rollstuhl und einer vierten Stützvorrichtung,
- Fig. 6: eine schematische Seitenansicht eines Treppensteigers mit Rollstuhl und einer fünften Stützvorrichtung,
- Fig. 7: eine teilweise aufgebrochene Seitenansicht des Treppensteigers der Fig. 1 in vergrößerter Darstellung,
- Fig. 8: einen Vertikalschnitt durch die Treppensteigvorrichtung der Fig. 7 und
- Fig. 9: eine Ansicht der Rückseite der Treppensteigvorrichtung gemäß Fig. 7 und 8.

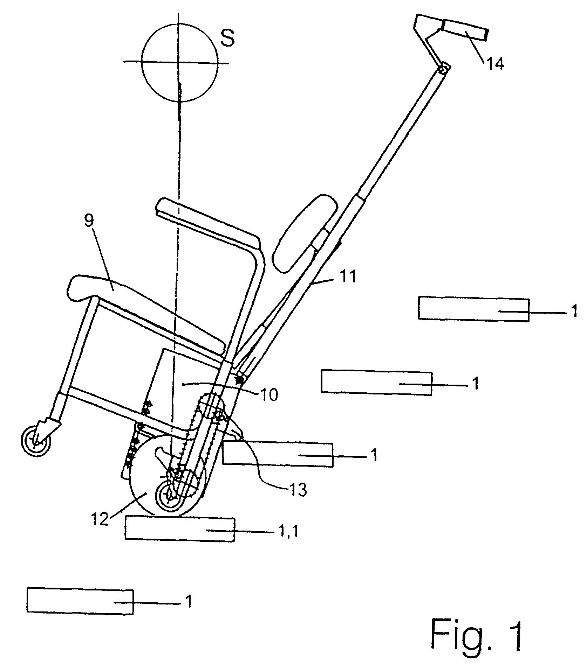

Fig. 1 zeigt in einer schematischen Seitenansicht eine auf einer Treppe 1 stehende Treppensteigvorrichtung 10 mit angebautem Rollstuhl 9. Die Treppensteigvorrichtung 10 steht mit ihren Laufrädern 12 auf einer Treppenstufe. Als Hubmechanik für den Transport des Rollstuhls 9 treppauf und treppab ist hier beispielsweise eine paternosterartige Einrichtung 13 eingezeichnet. Grundsätzlich sind jedoch alle Arten von vergleichbaren Hubeinrichtungen, wie sie in den weiteren Figuren erläutert werden, geeignet. Handgriffe 14 an einer Bedienungsstange 11 erlauben es der Bedienungsperson, Treppensteiger 10, Rollstuhl 9 und gehunfähige Person so weit nach hinten zu neigen, daß der Gesamtschwerpunkt S dieser Kombination sich genau über der Achse der Laufräder 12 befindet, die Kombination in dieser Position zu halten und treppauf und treppab zu führen.

Sobald die Hubvorrichtung 13 aktiv wird, verlieren die Laufräder 12 den Kontakt mit der Treppe 1. Dadurch befindet sich der Schwerpunkt S jetzt vor dem Auflager des Treppensteigers 10 auf der Treppe 1. Treppensteiger 10, Rollstuhl 9 und gehunfähige Person drohen nach vorne über die Treppe 1 hinunterzustürzen. Dies muß die Bedienungsperson durch entsprechend starkes Ziehen an den Handgriffen 14 verhindern. Die Praxis hat leider bewiesen, daß dies nicht immer möglich ist.

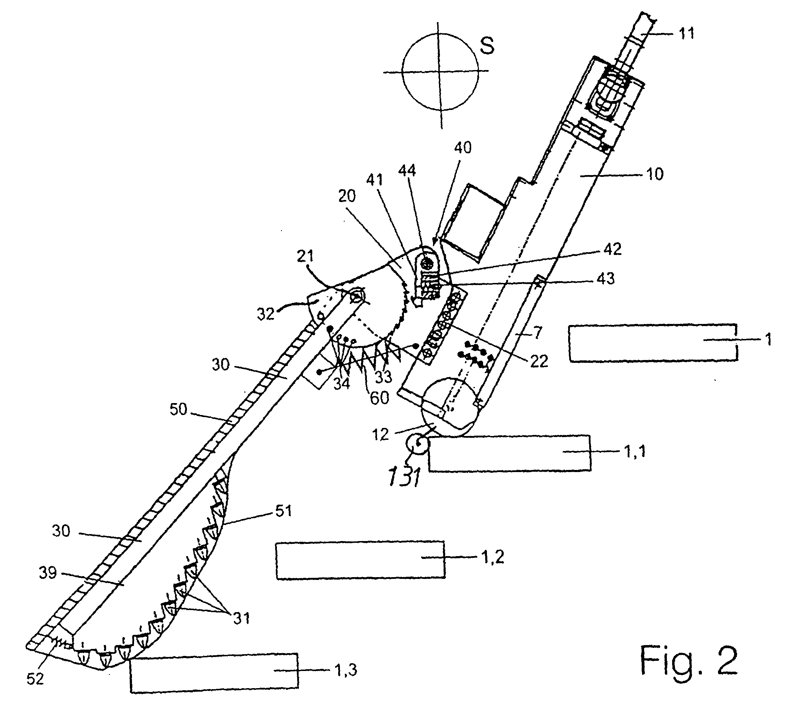

Fig. 2 zeigt in einer schematischen, teilweise aufgebrochenen Darstellung eine Sicherheitsvorrichtung, angebaut an die Treppensteigvorrichtung 10. Die Sicherheitsvorrichtung hat die Aufgabe zu verhindern, daß die Kombination aus Treppensteigvorrichtung 10, Rollstuhl und gehunfähiger Person die Treppe hinunterfallen kann, wenn sich der Schwerpunkt S zu weit nach vorne verlagert.

Die Sicherheitsvorrichtung umfaßt zunächst eine Montagevorrichtung 20, die am Treppensteiger 10 befestigt ist. Das Befestigungsteil 22 der Montagevorrichtung 20 kann an den jeweiligen Treppensteiger leicht angepaßt werden, so daß die Sicherheitsvorrichtung an allen Arten von Treppensteigern nachgerüstet werden kann.

An der Montagevorrichtung 20 ist eine waagerechte Drehachse 21 vorgesehen, auf der ein Stützarm 30 frei drehbar gelagert ist. Der Stützarm 30 erstreckt sich über wenige, z. B. ein oder zwei Treppenstufen 1. An seinem freien Ende ist er mit einer Anzahl von rutschfesten Stützfüßen 31 ausgerüstet, die an einem Schwert 39 so angeordnet sind, daß sie sich im Gefahrenfall annähernd senkrecht auf der Trittfläche einer Treppenstufe 1 abstützen.

Während der Stützarm 30 im Normalfall gegenüber der Montagevorrichtung 20 bzw. der Treppensteigvorrichtung 10 völlig frei beweglich sein muß, muß er im Gefahrenfall sofort blockiert werden. Hierzu dient eine Brems- und Sperrvorrichtung 40. Im vorliegenden Beispiel besteht diese aus einem Klinkenrad 32 und einer Klinke 41, 42. Das Klinkenrad 32 ist am Stützarm 30 befestigt, wobei die Winkelposition zwischen Klinkenrad 32 und Stützarm 30 bei Bedarf justiert werden kann. Hierzu sind Bohrungen 34 vorgesehen.

Die Klinke 41, 42 ist an der Montagevorrichtung 20 um eine waagerechte Achse 44 frei pendelnd aufgehängt. Solange die Treppensteigvorrichtung 10 korrekt nach hinten geneigt ist, sind Klinkenrad 32 und Klinke 41, 42 gegenseitig beabstandet. Sobald sich die Treppensteigvorrichtung 10 aufrichtet, verkürzt sich der Abstand zwischen Klinke 41 und Klinkenrad 32 gemäß einer SinusFunktion, bis schließlich die Klinke 41 in die Verzahnung 33 des Klinkenrads 32 einfälit. Dadurch wird der Stützarm 30 blockiert und die Treppensteigvorrichtung 10 kann sich nicht weiter aufrichten. Neigt die Bedienungsperson die Treppensteigvorrichtung 10 wieder korrekt nach hinten, löst sich die Klinke 41 aus dem Klinkenrad 32 und der Stützarm 30 ist frei beweglich.

Wie Fig. 2 erkennen läßt, besteht die Klinke aus einem ersten, leichten Teil 41, welches den Klinkenzahn besitzt, und einem zweiten, schweren Teil 42, welches für die stets senkrechte Position aufgrund der Schwerkraft verantwortlich ist. Beide Teile 41, 42 sind über eine leichte Feder 43 gekoppelt. Aufgrund dieser zweiteiligen Konstruktion kann der Klinkenzahn am leichten Klinkenteil 41 sehr schnell in die Klinkenradverzahnung 33 einfallen.

Über den Stützarm 30 und die Stützfüße 31 ist eine Gleitkufe 50 mit U-förmigem Querschnitt gestülpt. Eine Zugfeder 52 zieht den Stützarm 30 in die Gleitkufe 50. Die Stirnfläche 51 der Gleitkufe 50 ist so geformt, daß die Stützfüße 31 im Normalfall hinter der Stirnfläche 51 verschwinden. Dadurch gleitet lediglich die Stirnfläche 51 auf den Treppenstufenkanten. Ist die Stirnkante 51 mit einem gut gleitfähigen Material belegt, werden die Treppenkanten geschont.

Die Zugfeder 52 ist jedoch schwach genug, um sicherzustellen, daß sich die Stützfüße 31 im Gefahrenfall ohne Verzögerung auf der Trittfläche der nächsten Treppenstufe 1 - weitgehend senkrecht aufsitzend - abstützen können.

Zwischen Montagevorrichtung 20 und Stützvorrichtung 30 ist eine zusätzliche Stützfeder 60 vorgesehen. Diese ist so dimensioniert, daß sie kraftlos ist, wenn der Treppensteiger 10 die korrekt zur Treppe 1 geneigte Position hat. Verändert der Treppensteiger 10 seine Position nach vorne oder hinten, so zieht bzw. drückt die Stützfeder 60 den Treppensteiger 10 wieder in die korrekte Lage. Auf diese Weise wird die Bedienungsperson des Treppensteigers 10 kräftemäßig entlastet.

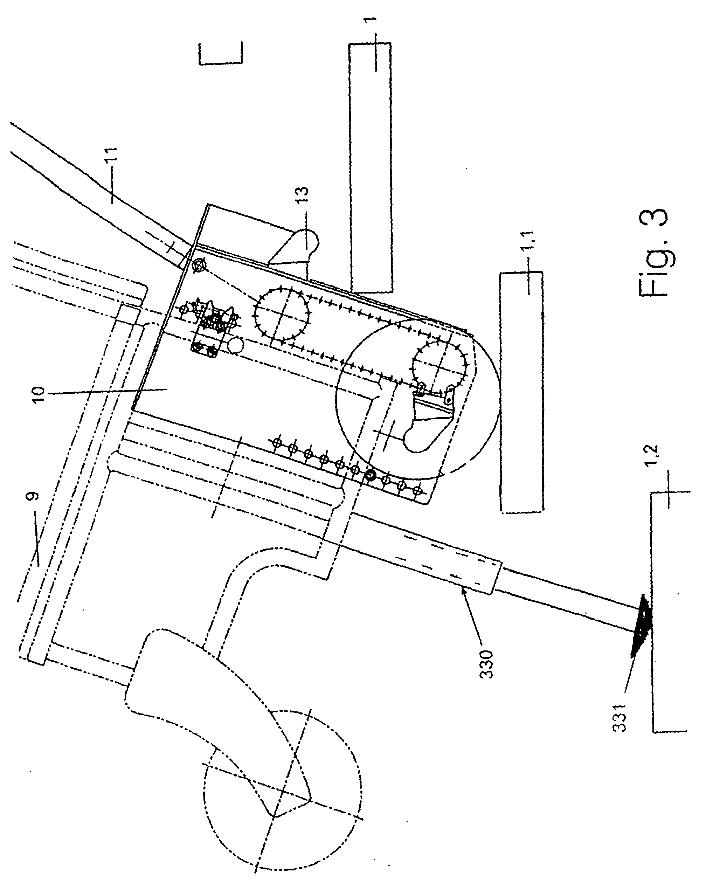

Fig. 3 zeigt ein zweites Ausführungsbeispiel. Treppensteiger 10 und Rollstuhl 9 entsprechen dem bisher Beschriebenen. Es ist eine Stützvorrichtung 330 vorgesehen in Form eines teleskopierbaren Fußes 331. Die Befestigung der Stützvorrichtung 330 am Rollstuhl 9 ist beispielhaft zu sehen; in der Praxis wird die Stützvorrichtung überwiegend am Treppensteiger 10 befestigt. Auch die starre Befestigung der Stützvorrichtung 330 ist nur beispielhaft zu sehen; in der Praxis wird man der Stützvorrichtung 330 auch eine Schwenklagerung geben, vergleichbar der der Fig. 2.

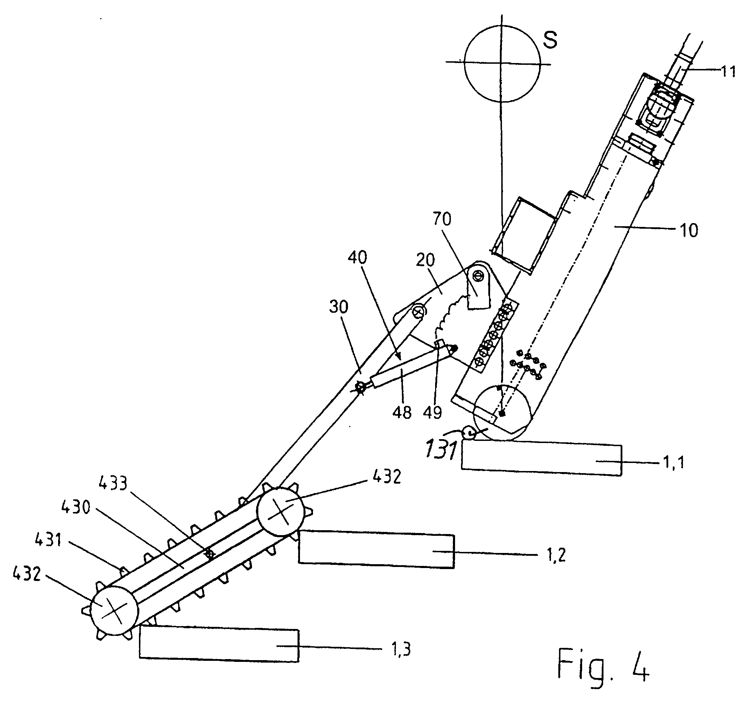

Fig. 4 zeigt eine weitere Ausführungsform eines Treppensteigers 10 mit Stützeinrichtung 30 und Brems- und Sperrvorrichtung 40. Letzere besteht in diesem Ausführungsbeispiel aus einer blockierbaren Zylinder-Kolben-Einheit 48 mit internem Fluid-Umlauf und einem elektrisch ansteuerbaren Sperrventil 49 im Fluid-Umlauf. Die Lage des Treppensteigers 10 auf der Treppe 1 wird mit Hilfe eines elektromechanischen Krängungssensors 70 gemessen, der ein Sperrsignal an das Sperrventil 49 sendet, wenn der Treppensteiger 10 eine gefährliche Position einnimmt.

In Abwandlung zu den vorstehend erläuterten Ausführungsformen ist am Ende der Stützvorrichtung 30 mittels Schwenklager 433 ein Hilfsrahmen 430 gelagert. Dieser trägt ein endloses, über zwei Umlenkräder 432 laufendes Raupenband 430, welches so kurz ist, daß es nur zwei Treppenstufen 1.2, 1.3 überbrückt. Die Bewegungen des Raupenbandes 431 werden über (nicht dargestellte) Sensoren und Tastfühler so blockiert und freigegeben, daß der Treppensteigvorgang mit großer Sicherheit erfolgt.

Es versteht sich, daß das Raupenband 431 durch einen im Hilfsrahmen 430 untergebrachten Antriebsmotor angetrieben werden kann. Es unterstützt so die Hubmechanik des Treppensteigers 10, so daß auch schwere Lasten ohne nennenswerte Schwankungen und wegen der Dreipunkt-Auflage auf der Treppe 1 mit großer Sicherheit treppauf und treppab befördert werden können. Dies gilt insbesondere dann, wenn die Hubmechanik des Treppensteigers 10 mit den gleichen Raupen ausgerüstet wird.

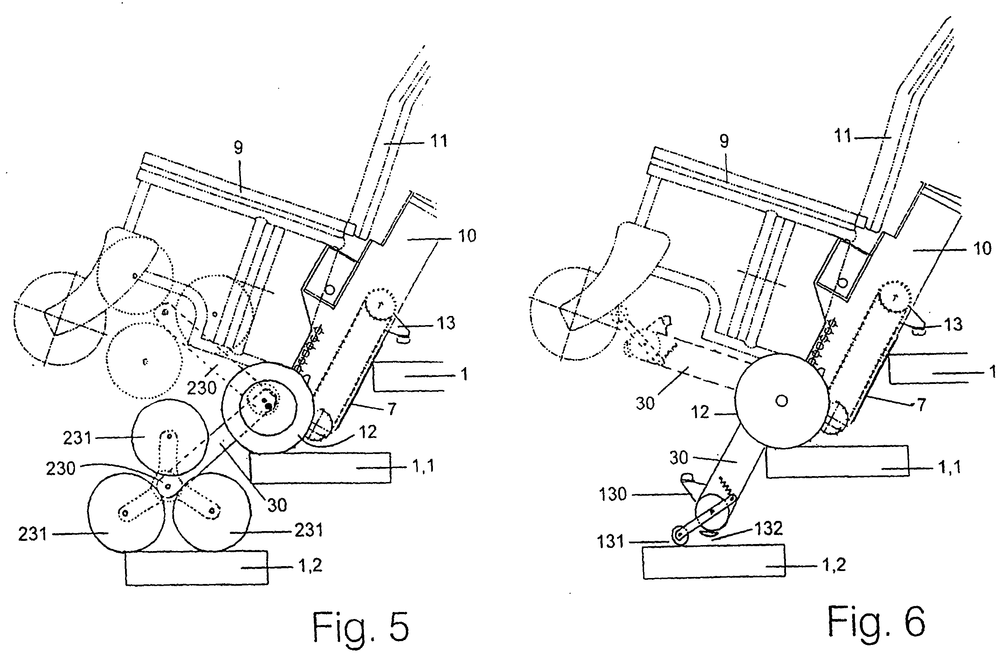

Fig. 5 zeigt einen Treppensteiger 10, dessen Stützvorrichtung 30 ein dreiarmiges Drehkreuz 230 mit drei Stützrädern 231 trägt. Die Stützräder 231 stützen sich auf der Trittfläche der Treppenstufe 1.2 auf. Wird das Drehkreuz 230 motorisch angetrieben und die Drehzahl mit der Hubmechanik 13 des Treppensteigers 10 synchronisiert, wird der Rollstuhl 9 wieder problemlos und praktisch ohne Schwankungen treppauf und treppab transportiert.

Fig. 6 zeigt eine weitere Variante eines Treppensteigers 10 mit paternosterartiger Hubmechanik 13 und einer Stützvorrichtung 30, die ebenfalls mit einer paternosterartigen Hubvorrichtung 130 ausgerüstet ist. Eine Tastrolle 131 und ein Tastfühler 132 dienen als Steuer- und Sicherheitsschalter für die Hubvorrichtung 130. Bei korrekter Abstimmung von Hubtrieb 13 am Treppensteiger 10 und Hubvorrichtung 130 am Stützarm 30 laufen die beiden Hubtriebe synchron und der Rollstuhl 9 mit der gehunfähigen Person wird praktisch ohne funktionsbedingte Kippbewegungen treppauf und treppab transportiert. Dank der nach wie vor vorhandenen Bremsund Sperrvorrichtung wird jedoch auch in diesem Fall die Stützvorrichtung 30 sofort blockiert, wenn sich der Treppensteiger 10 gefährlich aufrichtet und über die Treppe 1 hinunterzufallen droht. Es versteht sich, daß in einem solchen Fall die Hubtriebe 13, 130 sofort gestoppt werden.

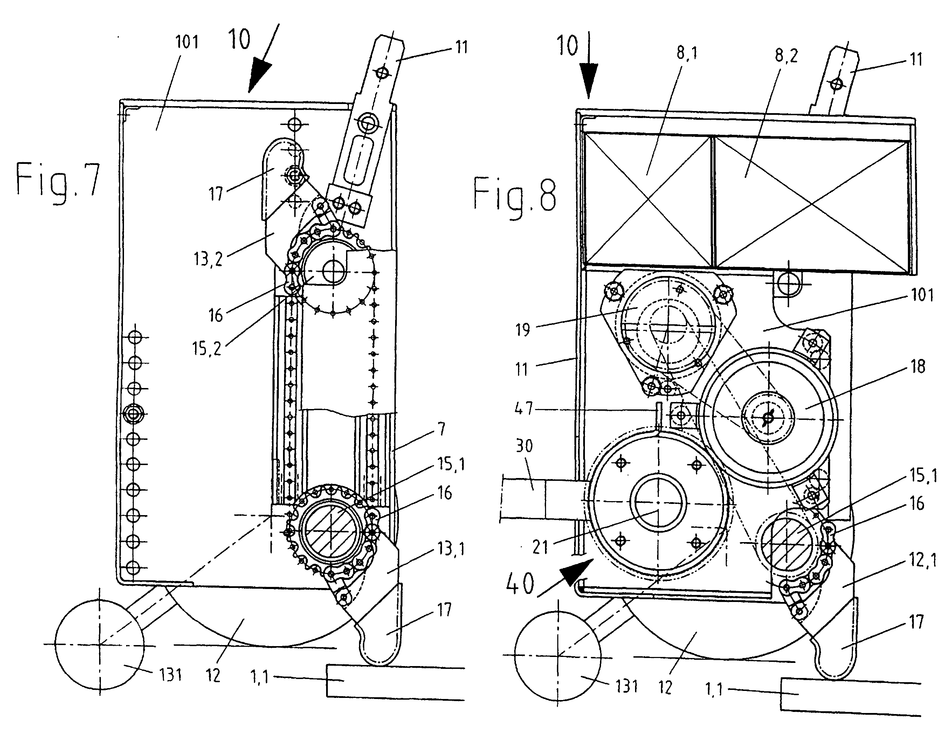

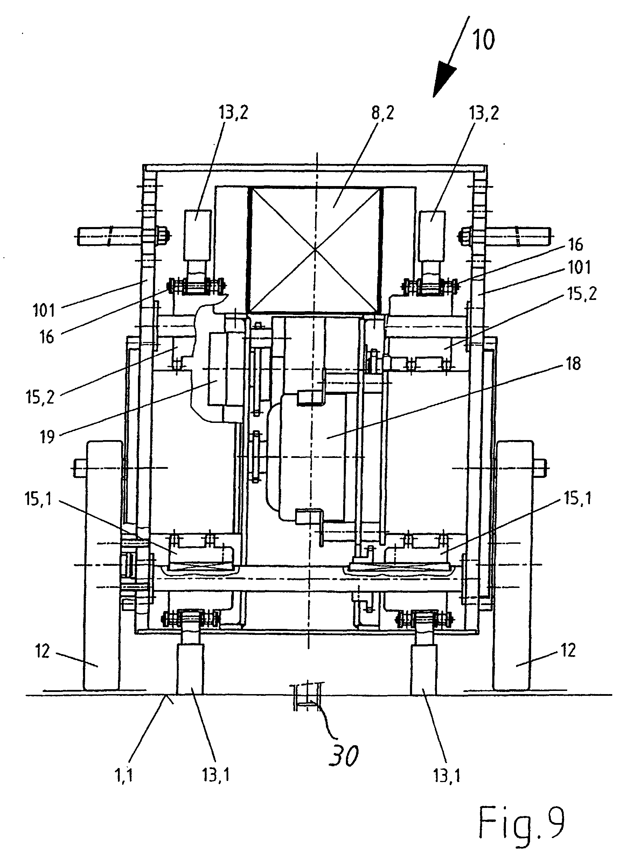

Die Fig. 7, 8 und 9 zeigen als teilweise aufgebrochene Seitenansicht, als Vertikalschnitt und als Rückansicht die paternosterartige Hubmechanik des Treppensteigers 10 der Fig. 1, 3, 5 und 6 in vergrößertem Maßstab. Man erkennt einen kräftigen Rahmen 101, in dem senkrecht übereinander waagerechte Wellen mit Kettenrädern 15.1, 15.2 gelagert sind. Über die Kettenräder 15.1, 15.2 läuft rechts und links je eine endlose Kette 16. An diesen sind jeweils zwei Fußelemente 13.1, 13.2 befestigt. Diese stehen mit einer gerundeten Kante auf der Treppenstufe 1.1 auf und sind mit einem rutschfesten und treppenschonenden Überzug 17 ausgerüstet. Wie die Figuren erkennen lassen, sind die Fußelemente 13.1, 13.2 so lang, daß sie die Laufräder 12 des Treppensteigers von der Treppenstufe 1.1 abheben und den Treppensteiger 10 über die Treppenstufenkante 1.1 heben.

Der Antrieb der Ketten 16 wird durch einen Elektromotor 18 (Fig. 8) über ein Getriebe 19 bewirkt. Die Stromversorgung des Elektromotors 18 erfolgt durch mitgeführte Akkumulatoren 8.1, 8.2.

Fig. 8 zeigt auch die Drehachse 21, an der die Stützvorrichtung 30 schwenkbar gelagert ist. Als Brems- und Sperrvorrichtung 40, die einerseits am Treppensteiger 10, andererseits am Stützarm 30 befestigt ist, ist hier eine Federbandbremse 47 vorgesehen. Federbandbremsen sind handelsüblich und zeichnen sich durch eine besondere Betriebssicherheit aus. Aufgrund ihrer Konstruktion besitzen sie bereits den erforderlichen Freilauf. Die Aktivierung der Federbandbremse 47 im Gefahrenfall erfolgt auch hier durch den Krängungssensor 70.

## Patentansprüche

1. Motorisch betriebene Treppensteigvorrichtung für den Transport von mit einem Treppensteiger (10) lösbar befestigten Geräten und Gütern, insbesondere von Rollstühlen (9) mit gehunfähigen Personen, umfassend
- einen stabilen Rahmen (101), darin
-- eine Energiequelle (8.1, 8.2),
-- eine Antriebsquelle (18),
-- eine Antriebssteuerung,
-- und eine treppengängige Hubmechanik,
- Laufräder (12) am Rahmen (101), mit denen der Treppensteiger steht bzw fährt,
**gekennzeichnet durch**
- einen entsperrbaren Freilauf in den Laufrädern (12),
- Tastfühler (7, 131, 132) und Sensoren (70) im Rahmen (101),
- eine gegenüber dem Treppensteiger (10) verschwenkbare Stützvorrichtung (30, 330), zur Abstützung auf einer Treppenstufe (1.2, 1.3),
- eine Brems- und Sperrvorrichtung (40) zum Festsetzen der Stützvorrichtung (30, 330), die vom Sensor (70) so gesteuert wird, dass die Stützvorrichtung (30, 330) gegenüber dem Treppensteiger (10) blockiert, wenn der Treppensteiger (10) über die Treppe (1) zu kippen droht.

2. Treppensteigvorrichtung nach Anspruch 1, **gekennzeichnet durch** das Merkmal:
- die Stützvorrichtung (30, 330) ist am Treppensteiger (10) befestigt.

3. Treppensteigvorrichtung nach Anspruch 1 oder 2, **gekennzeichnet durch** das Merkmal:
- die Stützvorrichtung (30, 330) kann eine lineare Hubbewegung ausführen.

4. Treppensteigvorrichtung nach Anspruch 3, **gekennzeichnet durch** das Merkmal:
- die Stützvorrichtung (30, 330) ist ein teleskopierbarer Fuß (331).

5. Treppensteigvorrichtung nach Anspruch 3, **gekennzeichnet durch** das Merkmal:
- die Stützvorrichtung ist ein Scherenarm.

6. Treppensteigvorrichtung nach Anspruch 4 oder 5, **gekennzeichnet durch** das Merkmal:
- es sind wenigstens zwei Füße (331) bzw. Scherenarme vorgesehen.

7. Treppensteigvorrichtung nach einem der Ansprüche 1 oder 2, **dadurch gekennzeichnet, dass**
- die Stützvorrichtung (30) am Treppensteiger (10) über eine mit einer Drehachse (21) ausgerüsteten Montagevorrichtung (20) gelagert ist,
- die Brems- und Sperrvorrichtung (40) einerseits an der Stützvorrichtung (30, 330) und andererseits an der Montagevorrichtung (20) befestigt ist,
- und der Sensor (70) die Brems- und Sperrvorrichtung (40) so steuert, dass die Stützvorrichtung (30, 330) freigegeben ist, solange der Treppensteiger (10) eine korrekte Neigung zur Treppe (1) einhält.

8. Treppensteigvorrichtung nach einem der Ansprüche 1 bis 7, **gekennzeichnet durch** die Merkmale:
- im unteren Endbereich der Stützvorrichtung (30, 330) angebrachte Einrichtungen (31, 130, 231, 331, 431) bewirken eine weitgehend senkrecht auf die Trittfläche der Treppenstufen (1.2, 1.3) auftreffende Abstützung.

9. Treppensteigvorrichtung nach Anspruch 8, **gekennzeichnet durch** das Merkmal:
- an der Stützvorrichtung (30) sind Stützfüße (31) angebracht, von denen sich jeweils einer im Gefahrenfall auf der Treppenstufe (1.2, 1.3) abstützen kann.

10. Treppensteigvorrichtung nach Anspruch 8, **gekennzeichnet durch** das Merkmal:
- am freien Ende der Stützvorrichtung (30) ist ein endloses Raupenband (430, 431) angebracht.

11. Treppensteigvorrichtung nach Anspruch 8, **gekennzeichnet durch** das Merkmal:
- am freien Ende der Stützvorrichtung (30) ist ein Drehkreuz (230) mit wenigstens zwei Stützrädern (231) angebracht.

12. Treppensteigvorrichtung nach Anspruch 8, **gekennzeichnet durch** das Merkmal:
- an der Stützvorrichtung (30) ist ein paternosterartiger Hubtrieb (130) befestigt.

13. Treppensteigvorrichtung nach einem der Anspruche 3 bis 6 und 11 bis 13, **gekennzeichnet durch** die Merkmale:
- Fuß (331), Scherenarm, Raupenband (430, 431), Drehkreuz (230) bzw. Paternoster (130) sind motorisch angetrieben,
- der Antrieb ist mit der Hubmechanik des Treppensteigers (10) synchronisiert

14. Treppensteigvorrichtung nach einem der Ansprüche 1 bis 13, **gekennzeichnet durch** das Merkmal:
- der Sensor (70) ist ein Pendel (41) am Treppensteiger (10) bzw. am Rollstuhl (9) montierbar.

15. Treppensteigvorrichtung nach einem der Ansprüche 1 bis 14, **gekennzeichnet durch** das Merkmal:
- die Brems- und Sperrvorrichtung (40) besteht aus einem Klinkenrad (32) und einer Klinke (41).

16. Treppensteigvorrichtung nach Anspruch 15, **gekennzeichnet durch** die Merkmale:
- das Zentrum des Klinkenrades (32) liegt im Zentrum der Drehachse (21),
- die Klinke (41) ist als Pendel ausgebildet und an einer Achse (44) an der Montagevorrichtung (20) pendelnd montiert.

17. Treppensteigvorrichtung nach Anspruch 15 oder 16, **gekennzeichnet durch** die Merkmale:
- die Klinke (41) besteht aus einem massereichen und einem massearmen Teil,
- eine Feder zieht beide Teile zusammen.

18. Treppensteigvorrichtung nach einem der Ansprüche 1 bis 13, **gekennzeichnet durch** das Merkmal:
- die Brems- und Sperrvorrichtung (40) ist ein blockierbares Zugglied endlicher Länge zwischen Stützvorrichtung (30) und Montagevorrichtung (20) bzw. Treppensteiger (10).

19. Treppensteigvorrichtung nach einem der Ansprüche 1 bis 13 **gekennzeichnet durch** das Merkmal:
- als Brems- und Sperrvorrichtung (40) ist eine Backenbremse vorgesehen.

20. Treppensteigvorrichtung nach einem der Ansprüche 1 bis 13, **gekennzeichnet durch** das Merkmal:
- als Brems- und Sperrvorrichtung (40) ist eine Federbandbremse (47) vorgesehen.

21. Treppensteigvorrichtung nach einem der Ansprüche 1 bis 13, **gekennzeichnet durch** das Merkmal:
- als Brems- und Sperrvorrichtung (40) ist eine Elektrokupplung vorgesehen.

22. Treppensteigvorrichtung nach einem der Ansprüche 1 bis 13, **gekennzeichnet durch** das Merkmal:
- als Brems- und Sperrvorrichtung (40) ist eine blockierbare Zylinder-Kolben-Einheit (48) vorgesehen.

23. Treppensteigvorrichtung nach Anspruch 22, **gekennzeichnet durch** die Merkmale:
- die Zylinder-Kolben-Einheit (48) besitzt
-- einen internen Fluid-Umlauf und
-- ein vom Sensor (70) angesteuertes Sperrventil (49) im Fluid-Umlauf.

24. Treppensteigvorrichtung nach einem der Ansprüche 1 bis 13, **gekennzeichnet durch** die Merkmale:
- parallel zur Brems- und Sperrvorrichtung ist eine Stützfeder (60) vorgesehen,
- die Stützfeder (60) ist kraftlos, wenn die Treppensteigvorrichtung (10) korrekt zur Treppe (1) hin geneigt ist.

25. Treppensteigvorrichtung nach einem der Ansprüche 1 bis 24, **gekennzeichnet durch** die Merkmale:
- parallel zur Brems- und Sperrvorrichtung (40) ist ein Antrieb vorgesehen,
- der Antrieb ist gesteuert in Abhängigkeit von den Soll-Ist-Differenzen,
-- der Lage der Stützvorrichtung (30, 330) relativ zum Treppensteiger (10) und/oder
-- der Andruckkraft der Stützvorrichtung (30, 330) an der Treppe (1).

26. Treppensteigvorrichtung nach Anspruch 25, **gekennzeichnet durch** das Merkmal:
- Antrieb und Brems- und Sperrvorrichtung (40) sind integriert.

27. Treppensteigvorrichtung nach einem der Ansprüche 1 bis 26, **gekennzeichnet durch** die Merkmale:
- die Hubmechanik umfaßt im wesentlichen
-- ein endloses Raupenband, welches nur zwei Treppenstufen (1.1, 1.2) übergreift,
- die Antriebsqueile (18) ist ein Elektromotor mit Getriebe.

28. Treppensteigvorrichtung nach Anspruch 27, **gekennzeichnet durch** die Merkmale:
- Raupenband und Antriebsquelle (18) sind in einem Hilfsrahmen gelagert,
- der Hilfsrahmen ist am Rahmen (101) des Treppensteigers (10) schwenkbar gelagert.

29. Treppensteigvorrichtung nach einem der Ansprüche 1 bis 26, **gekennzeichnet durch** die Merkmale:
- die Hubmechanik umfaßt im wesentlichen zwei an den Rahmenseiten gelagerte Drehkreuze mit wenigstens zwei Laufrädern,
- die Antriebsquelle (18) ist ein Elektromotor mit Getriebe.

30. Treppensteigvorrichtung nach einem der Ansprüche 1 bis 26, **gekennzeichnet durch** die Merkmale:
- die Hubmechanik umfaßt im wesentlichen
-- eine Geradführung,
-- einen Hubrahmen, beweglich gelagert an der Geradführung,
-- wenigstens eine Klappe, aus- und einschwenkbar gelagert am Hubrahmen,
-- wenigstens eine von der Antriebsquelle (18) angetriebene, endlose Kette,
-- einen Schubhebel zwischen Kette und Klappe,
-- Stützfüße aus einem rutschfesten und treppenschonenden Material an der Unterkante der Klappe.

31. Treppensteigvorrichtung nach Anspruch 30, **gekennzeichnet durch** das Merkmal:
- die Antriebsquelle (18) ist ein Elektromotor mit Getriebe.

32. Treppensteigvorrichtung nach einem der Ansprüche 1 bis 27, **gekennzeichnet durch** die Merkmale:
- die Hubmechanik umfaßt im wesentlichen
-- zwei paternosterartig parallel umlaufende endlose Ketten (16),
-- wenigstens ein Fußelement (13.1, 13.2) an jeder Kette (16),
- die Antriebsquelle (18) ist ein Elektromotor mit Getriebe;
- die Fußelemente (13.1, 13.2) können auf der Treppe (1) aufstehen.

33. Treppensteigvorrichtung nach Anspruch 32, **gekennzeichnet durch** das Merkmal:
- die Fußelemente (13.1, 13.2) sind dazu geeignet mit einer gerundeten Kante auf der Treppe (1) zu stehen.

34. Treppensteigvorrichtung nach Anspruch 32 oder 33, **gekennzeichnet durch** das Merkmal:
- die Fußelemente (13.1, 13.2) tragen einen rutsch- und abriebfesten Überzug (17).

35. Treppensteigvorrichtung nach Anspruch 34, **gekennzeichnet durch** das Merkmal:
- Tastfühler an den Rädern (131, 132) bzw. Tastfühler (7) im bzw. am Rahmen (11) können die korrekte Position des Treppensteigers (10) auf der Treppe (1) messen.

36. Treppensteigvorrichtung nach einem der Ansprüche 30 bis 35, **gekennzeichnet durch** das Merkmal:
- Sensoren messen die obere und untere Endstellung der Klappe, des Hubrahmens bzw. der Fußelemente (13.1, 13.2).

37. Treppensteigvorrichtung nach einem der Ansprüche 1 bis 36, **gekennzeichnet durch** das Merkmal:
- eine mikroprozessorgesteuerte Ablaufsteuerung aktiviert die Antriebsquelle (18) und den Antrieb in der Stützvorrichtung (30, 330) in der richtigen Reihenfolge und Geschwindigkeit.

## Claims

1. Motor-operated stair-climbing arrangement for transporting goods and equipment fastened releasably to a stair climber (10), in particular wheelchairs (9) with individuals who are unable to walk, comprising
- a stable frame (101), containing
-- a power source (8.1, 8.2),
-- a drive source (18),
-- a drive control means,
-- and a stairs-compatible lifting mechanism,
- running wheels (12) on the frame (101), on which the stair climber stands and moves,
**characterized by**
- an unlockable freewheel element in the running wheels (12),
- contact elements (7, 131, 132) and sensors (70) in the frame (101),
- a supporting arrangement (30, 330) which can be pivoted in relation to the stair climber (10) and is intended for supporting on a stair (1.2, 1.3),
- a braking and blocking arrangement (40) for securing the supporting arrangement (30, 330), which is controlled by the sensor (70) such that the supporting arrangement (30, 330) blocks in relation to the stair climber (10) when the stair climber (10) threatens to tilt over the stair (1).

2. Stair-climbing arrangement according to Claim 1, **characterized by** the following feature:
- the supporting arrangement (30, 330) is fastened on the stair climber (10).

3. Stair-climbing arrangement according to Claim 1 or 2, **characterized by** the following feature:
- the supporting arrangement (30, 330) can execute a linear lifting movement.

4. Stair-climbing arrangement according to Claim 3, **characterized by** the following feature:
- the supporting arrangement (30, 330) is a telescopic foot (331).

5. Stair-climbing arrangement according to Claim 3, **characterized by** the following feature:
- the supporting arrangement is a scissors arm.

6. Stair-climbing arrangement according to Claim 4 or 5, **characterized by** the following feature:
- at least two feet (331) or scissors arms are provided.

7. Stair-climbing arrangement according to either of Claims 1 or 2, **characterized in that**
- the supporting arrangement (30) is mounted on the stair climber (10) via a mounting arrangement (20) provided with a swivel pin (21),
- the braking and blocking arrangement (40) is fastened, on the one hand, on the supporting arrangement (30, 330) and, on the other hand, on the mounting arrangement (20),
- and the sensor (70) controls the braking and blocking arrangement (40) such that the supporting arrangement (30, 330) is released as long as the stair climber (10) maintains the correct inclination in relation to the stair (1).

8. Stair-climbing arrangement according to one of Claims 1 to 7, **characterized by** the following features:
- devices (31, 130, 231, 331, 431) fitted in the bottom end region of the supporting arrangement (30, 330) provide support which is largely in vertical contact with the tread surface of the stairs (1.2, 1.3).

9. Stair-climbing arrangement according to Claim 8, **characterized by** the following feature:
- fitted on the supporting arrangement (30) are supporting feet (31), of which, in the event of danger, in each case one may be supported on the stair (1.2, 1.3).

10. Stair-climbing arrangement according to Claim 8, **characterized by** the following feature:
- an endless tracked belt (430, 431) is fitted at the free end of the supporting arrangement (30).

11. Stair-climbing arrangement according to Claim 8, **characterized by** the following feature:
- a spider (230) with at least two supporting wheels (231) is fitted at the free end of the supporting arrangement (30).

12. Stair-climbing arrangement according to Claim 8, **characterized by** the following feature:
- a paternoster-like lifting drive (130) is fastened on the supporting arrangement (30).

13. Stair-climbing arrangement according to one of Claims 3 to 6 and 11 to 13, **characterized by** the following features:
- the foot (331), scissors arm, tracked belt (430, 431), spider (230) and/or paternoster (130) are motor-driven,
- the drive is synchronized with the lifting mechanism of the stair climber (10).

14. Stair-climbing arrangement according to one of Claims 1 to 13, **characterized by** the following feature:
- the sensor (70) is a pendulum (41) which can be mounted on the stair climber (10) or on the wheelchair (9).

15. Stair-climbing arrangement according to one of Claims 1 to 14, **characterized by** the following feature:
- the braking and blocking arrangement (40) comprises a ratchet wheel (32) and a ratchet (41).

16. Stair-climbing arrangement according to Claim 15, **characterized by** the following features:
- the centre of the ratchet wheel (32) is located in the centre of the swivel pin (21),
- the ratchet (41) is designed as a pendulum and is mounted for swinging action on a spindle (44) on the mounting arrangement (20).

17. Stair-climbing arrangement according to Claim 15 or 16, **characterized by** the following features:
- the ratchet (41) comprises a high-mass and a low-mass part,
- a spring draws the two parts together.

18. Stair-climbing arrangement according to one of Claims 1 to 13, **characterized by** the following feature:
- the braking and blocking arrangement (40) is a blockable tension member of finite length between the supporting arrangement (30) and mounting arrangement (20) and/or stair climber (10).

19. Stair-climbing arrangement according to one of Claims 1 to 13, **characterized by** the following feature:
- a shoe brake is provided as the braking and blocking arrangement (40).

20. Stair-climbing arrangement according to one of Claims 1 to 13, **characterized by** the following feature:
- a spring-band brake (47) is provided as the braking and blocking arrangement (40).

21. Stair-climbing arrangement according to one of Claims 1 to 13, **characterized by** the following feature:
- an electric clutch is provided as the braking and blocking arrangement (40).

22. Stair-climbing arrangement according to one of Claims 1 to 13, **characterized by** the following feature:
- a blockable cylinder/piston unit (48) is provided as the braking and blocking arrangement (40).

23. Stair-climbing arrangement according to Claim 22, **characterized by** the following features:
- the cylinder/piston unit (48) has
-- an internal fluid circuit, and
-- a shut-off valve (49), activated by the sensor (70), in the fluid circuit.

24. Stair-climbing arrangement according to one of Claims 1 to 13, **characterized by** the following features:
- a supporting spring (60) is provided parallel to the braking and blocking arrangement,
- the supporting spring (60) is devoid of force when the stair-climbing arrangement (10) is inclined correctly in the direction of the stair (1).

25. Stair-climbing arrangement according to one of Claims 1 to 24, **characterized by** the following features:
- a drive is provided parallel to the braking and blocking arrangement (40),
- the drive is controlled in dependence on the desired/actual differences,
-- on the position of the supporting arrangement (30, 330) relative to the stair climber (10) and/or
-- on the contact force of the supporting arrangement (30, 330) on the stair (1).

26. Stair-climbing arrangement according to Claim 25, **characterized by** the following feature:
- the drive and braking and blocking arrangement (40) are integrated.

27. Stair-climbing arrangement according to one of Claims 1 to 26, **characterized by** the following features:
- the lifting mechanism essentially comprises
-- an endless tracked belt, which only spans two stairs (1.1, 1.2),
- the drive source (18) is an electric motor with gear mechanism.

28. Stair-climbing arrangement according to Claim 27, **characterized by** the following features:
- the tracked belt and drive source (18) are mounted in an auxiliary frame,
- the auxiliary frame is mounted pivotably on the frame (101) of the stair climber (10).

29. Stair-climbing arrangement according to one of Claims 1 to 26, **characterized by** the following features:
- the lifting mechanism essentially comprises two spiders which are mounted on the frame sides and have at least two running wheels,
- the drive source (18) is an electric motor with gear mechanism.

30. Stair-climbing arrangement according to one of Claims 1 to 26, **characterized by** the following features:
- the lifting mechanism essentially comprises
-- a rectilinear guide,
-- a lifting frame, mounted in a movable manner on the rectilinear guide,
-- at least one flap, mounted on the lifting frame such that it can be pivoted out and in,
-- at least one endless chain driven by the drive source (18),
-- a pushing lever between the chain and flap,
-- supporting feets, made of a non-slip material which has no adverse effect on the stairs, on the bottom edge of the flap.

31. Stair-climbing arrangement according to Claim 30, **characterized by** the following feature:
- the drive source (18) is an electric motor with gear mechanism.

32. Stair-climbing arrangement according to one of Claims 1 to 27, **characterized by** the following features:
- the lifting mechanism essentially comprises
-- two endless chains (16) circulating parallel to one another in a paternoster-like manner,
-- at least one foot element (13.1, 13.2) on each chain (16),
- the drive source (18) is an electric motor with gear mechanism;
- the foot elements (13.1, 13.2) can stand on the stair (1).

33. Stair-climbing arrangement according to Claim 32, **characterized by** the following feature:
- the foot elements (13.1, 13.2) are suitable for standing on the stair (1) by way of a rounded edge.

34. Stair-climbing arrangement according to Claim 32 or 33, **characterized by** the following feature:
- the foot elements (13.1, 13.2) bear a non-slip and abrasion-resistant coating (17).

35. Stair-climbing arrangement according to Claim 34, **characterized by** the following feature:
- contact elements on the wheels (131, 132) and/or contact elements (7) in or on the frame (11) can measure the correct position of the stair climber (10) on the stair (1).

36. Stair-climbing arrangement according to one of Claims 30 to 35, **characterized by** the following feature:
- sensors measure the top and bottom end positions of the flap, of the lifting frame and/or of the foot elements (13.1, 13.2).

37. Stair-climbing arrangement according to one of Claims 1 to 36, **characterized by** the following feature:
- a microprocessor-controlled sequence control system activates the drive source (18) and the drive in the supporting arrangement (30, 330) in the correct sequence and at the correct speed.

## Revendications

1. Dispositif à moteur pour monter des escaliers, pour le transport d'appareils ou marchandises fixés de manière démontable avec un monte-escalier (10), en particulier de fauteuils roulants (9) avec des personnes handicapées, comprenant :
- un cadre rigide (101), et dans celui-ci
-- une source d'énergie (8.1, 8.2),
-- une source d'entraînement (18),
-- une commande d'entraînement,
-- et un mécanisme de levage allant sur les escaliers,
- des roues de déplacement (12) sur le cadre (101), avec lesquelles le monte-escalier repose dressé ou se déplace,
**caractérisé par** :
- une roue libre déblocable dans les roues de déplacement (12),
- des palpeurs (7, 131, 132) et détecteurs (70) dans le cadre (101),
- un dispositif d'appui (30, 330) pivotable par rapport au monte-escalier (10), pour l'appui sur une marche d'escalier (1.2, 1.3),
- un dispositif de freinage et blocage (40) pour immobiliser le dispositif d'appui (30, 330), qui est piloté par le détecteur (70) de telle manière que le dispositif d'appui (30, 330) est bloqué par rapport au monte-escalier (10) lorsque le monte-escalier (10) menace de basculer par dessus l'escalier (1) .

2. Dispositif pour monter des escaliers selon la revendication 1, **caractérisé par** la particularité :
- le dispositif d'appui (30, 330) est fixé au monte-escalier (10).

3. Dispositif pour monter des escaliers selon la revendication 1 ou 2, **caractérisé par** la particularité :
- le dispositif d'appui (30, 330) peut effectuer un mouvement de course linéaire

4. Dispositif pour monter des escaliers selon la revendication 3, **caractérisé par** la particularité :
- le dispositif d'appui (30, 330) est un pied télescopique (331)

5. Dispositif pour monter des escaliers selon la revendication 3, **caractérisé par** la particularité :
- le dispositif d'appui (30, 330) est un bras de ciseau.

6. Dispositif pour monter des escaliers selon la revendication 4 ou 5, **caractérisé par** la particularité :
- il est prévu au moins deux pieds (331) ou respectivement bras de ciseaux.

7. Dispositif pour monter des escaliers selon la revendication 1, **caractérisé en ce que** :
- le dispositif d'appui (30) est supporté sur le monte-escalier (10) par l'intermédiaire d'un dispositif de montage (20) équipé d'un axe de rotation (21),
- le dispositif de freinage et blocage (40) est fixé d'une part au dispositif d'appui (30, 330) et d'autre part au dispositif de montage (20),
- et le capteur (70) commande le dispositif de freinage et blocage (40) de telle manière que le dispositif d'appui (30, 330) est libéré tant que le monte-escalier (10) conserve une inclinaison normale par rapport à l'escalier (1).

8. Dispositif pour monter des escaliers selon l'une des revendications 1 à 7, **caractérisé par** les particularités :
- des moyens (31, 130, 231, 331, 431) montés dans la zone d'extrémité inférieure du dispositif d'appui (30, 330) assurent un appui rencontrant en grande partie verticalement la surface de marche des marches d'escalier (1.2, 1.3).

9. Dispositif pour monter des escaliers selon la revendication 8, **caractérisé par** la particularité :
- des pieds d'appui (31) sont montés sur le dispositif d'appui (30), et en cas de danger l'un ou l'autre de ces pieds d'appui peut s'appuyer sur la marche d'escalier (1.2, 1.3).

10. Dispositif pour monter des escaliers selon la revendication 8, **caractérisé par** la particularité :
- une chenille sans fin (430 , 431) est montée à l'extrémité libre du dispositif d'appui (30).

11. Dispositif pour monter des escaliers selon la revendication 8, **caractérisé par** la particularité :
- un tourniquet (230) avec au moins deux roues d'appui (231) est monté à l'extrémité libre du dispositif d'appui (30).

12. Dispositif pour monter des escaliers selon la revendication 8, **caractérisé par** la particularité :
- un entraînement de levage (130) du type paternoster est fixé au dispositif d'appui (30).

13. Dispositif pour monter des escaliers selon l'une des revendications 3 à 6 et 11 à 13 , **caractérisé par** les particularités :
- le pied (331), bras de ciseaux, chenille (430, 431), tourniquet (230), et respectivement paternoster (130) sont entraînés par moteur,
- l'entraînement est synchronisé avec le mécanisme de levage du monte-escalier (10).

14. Dispositif pour monter des escaliers selon l'une des revendications 1 à 13, **caractérisé par** la particularité :
- Le détecteur (70) est un pendule (41) qui peut être monté sur le monte-escalier (10) ou respectivement le fauteuil roulant (9).

15. Dispositif pour monter des escaliers selon l'une des revendications 1 à 14, **caractérisé par** la particularité :
- le dispositif de freinage et blocage (40) est constitué d'une roue à cliquet (32) et d'un cliquet (41).

16. Dispositif pour monter des escaliers selon la revendication 15, **caractérisé par** les particularités :
- le centre de la roue à cliquet (32) se trouve au centre de l'axe de rotation (21),
- le cliquet (41) est réalisé sous la forme d'un pendule, monté oscillant sur un axe (44) sur le dispositif de montage (20).

17. Dispositif pour monter des escaliers selon la revendication 15 ou 16, **caractérisé par** les particularités :
- le cliquet (41) est constitué d'une partie massive et d'une partie légère,
- un ressort tire les deux parties l'une vers l'autre.

18. Dispositif pour monter des escaliers selon l'une des revendications 1 à 13, **caractérisé par** la particularité :
- le dispositif de freinage et blocage (40) est un organe de traction blocable de longueur finie entre le dispositif d'appui (30) et le dispositif de montage (20) ou le monte-escalier (10).

19. Dispositif pour monter des escaliers selon l'une des revendications 1 à 13, **caractérisé par** la particularité ;
- il est prévu un frein à mâchoire en tant que dispositif de freinage et blocage (40).

20. Dispositif pour monter des escaliers selon l'une des revendications 1 à 13, **caractérisé par** la particularité :
- il est prévu un frein à bande élastique (47) en tant que dispositif de freinage et blocage (40).

21. Dispositif pour monter des escaliers selon l'une des revendications 1 à 13, **caractérisé par** la particularité :
- il est prévu un accouplement électrique en tant que dispositif de freinage et blocage (40).

22. Dispositif pour monter des escaliers selon l'une des revendications 1 à 13, **caractérisé par** la particularité :
- il est prévu un ensemble cylindre-piston blocable (48) en tant que dispositif de freinage et blocage (40).

23. Dispositif pour monter des escaliers selon la revendication 22, **caractérisé par** les particularités:
- l'ensemble cylindre-piston (48) possède :
-- un circuit fluidique interne et,
-- dans le circuit fluidique, une vanne de blocage (49) pilotée par le détecteur (70).

24. Dispositif pour monter des escaliers selon l'une des revendications 1 à 13, **caractérisé par** les particularités :
- il est prévu un ressort d'appui (60) en parallèle avec le dispositif de freinage et blocage,
- le ressort d'appui (60) est sans force, lorsque le dispositif pour monter des escaliers (10) est correctement incliné par rapport à l'escalier (1).

25. Dispositif pour monter des escaliers selon l'une des revendications 1 à 24, **caractérisé par** les particularités :
- il est prévu un entraînement en parallèle avec le dispositif de blocage (40),
- l'entraînement est piloté en fonction de la différence consigne-réalité,
-- de la position du dispositif d'appui (30, 130) par rapport au monte-escalier (10) et/ou
-- de la force d'appui du dispositif d'appui (30, 130) sur l'escalier (1).

26. Dispositif pour monter des escaliers selon la revendication 25, **caractérisé par** la particularité :
- l'entraînement et le dispositif de freinage et blocage (40) sont intégrés.

27. Dispositif pour monter des escaliers selon l'une des revendications 1 à 26, **caractérisé par** les particularités :
- le mécanisme de levage comprend essentiellement
-- une chenille sans fin, qui ne vient en prise que sur deux marches d'escalier (1.1, 1.2)
-- la source d'entraînement (18) est un moteur électrique avec réducteur.

28. Dispositif pour monter des escaliers selon la revendication 27, **caractérisé par** les particularités :
- la chenille et la source d'entraînement (18) sont supportés dans un cadre auxiliaire,
- le cadre auxiliaire est supporté oscillant sur le cadre (101) du monte-escalier (10).

29. Dispositif pour monter des escaliers selon l'une des revendications 1 à 26, **caractérisé par** les particularités :
- le mécanisme de levage comprend essentiellement deux tourniquets supportés en rotation sur les côtés du cadre et comprenant au moins deux roues de déplacement,
- la source d'entraînement (18) est un moteur électrique avec réducteur.

30. Dispositif pour monter des escaliers selon l'une des revendications 1 à 26, **caractérisé par** les particularités :
- le mécanisme de levage comprend essentiellement
-- un guidage rectiligne,
-- un cadre de levage, supporté mobile sur le guidage rectiligne,
-- au moins un volet, supporté sortant et rentrant par pivotement sur le cadre de levage,
-- au moins une chaîne sans fin entraînée par la source d'entraînement (18)
-- un levier de poussée entre la chaîne et le volet,
-- sur le bord inférieur du volet, des pieds d'appui en une matière antidérapante et protectrice pour l'escalier.

31. Dispositif pour monter des escaliers selon la revendication 30, **caractérisé par** la particularité :
- la source d'entraînement (18) est un moteur électrique avec réducteur.

32. Dispositif pour monter des escaliers selon l'une des revendications 1 à 27, **caractérisé par** les particularités :
- le mécanisme de levage comprend essentiellement :
-- deux chaînes sans fin circulantes en parallèle (16), du genre paternoster,
-- au moins un élément formant pied (13.1, 13.2) sur chaque chaîne (16),
- la source d'entraînement (18) est un moteur électrique avec réducteur ;
- les éléments formant pied (13.1, 13.2) peuvent se placer debout sur l'escalier (1).

33. Dispositif pour monter des escaliers selon la revendication 32, **caractérisé par** la particularité :
- les éléments formant pied (13.1, 13.2) sont adaptés à se placer debout sur l'escalier (1) par un bord arrondi.

34. Dispositif pour monter des escaliers selon la revendication 32 ou 33, **caractérisé par** la particularité :
- les éléments formant pied (13.1, 13.2) portent un revêtement (17) anti-dérapant et anti-glissement.

35. Dispositif pour monter des escaliers selon la revendication 34, **caractérisé par** la particularité :
- des palpeurs sur les roues (131, 132) ou respectivement des palpeurs (7) dans ou sur le cadre (11) peuvent mesurer la position correcte du monte-escalier (10) sur l'escalier (1).

36. Dispositif pour monter des escaliers selon l'une des revendications 30 à 35, **caractérisé par** la particularité :
- des détecteurs mesurent la position d'extrémité supérieure ou inférieure du volet, du cadre de levage ou respectivement des éléments formant pied (13.1, 13.2).

37. Dispositif pour monter des escaliers selon l'une des revendications 1 à 36, **caractérisé par** la particularité :
- une commande de séquence, commandée par microprocesseur, active la source d'entraînement (18) et l'entraînement dans le dispositif d'appui (30, 330) dans le bon ordre et à la bonne vitesse.
